# EUROPEAN PATENT SPECIFICATION

(11) **EP 2 789 456 B1**
(45) Date of publication and mention of the grant of the patent: **01.11.2017**
(21) Application number: 12854834.4
(22) Date of filing: 07.12.2012
(51) Int. Cl.: B29D 30/20, B29D 30/26

(54) **TRIPLE-DRUM TIRE-FORMING MACHINE AND MATERIAL-CONVEYING METHOD THEREFORE**
DREI-TROMMEL-REIFENFORMUNGSMASCHINE SOWIE MATERIALZUFÜHRVERFAHREN DAFÜR
MACHINE DE FORMATION DE PNEUMATIQUE À TROIS TAMBOURS ET PROCÉDÉ DE TRANSPORT DE MATIÈRE POUR CETTE MACHINE

(30) Priority: 07.12.2011 CN 201110402784
(43) Date of publication of application: 15.10.2014
(73) Proprietor: Mesnac Co. Ltd., Qingdao, Shandong 266042 (CN)
(72) Inventor: YUAN, Zhongxue, Qingdao, Shandong (CN); CHENG, Jiguo, Shandong 266042 (CN); XIONG, Xiaowei, Shandong 266042 (CN); HUANG, Wei, Shandong 266042 (CN); PENG, Xuefeng, Shandong 266042 (CN)
(74) Representative: Rentsch Partner AG
(86) International application number: PCT/CN2012/086138
(87) International publication number: WO 2013/083068

(56) References cited:
- EP-A1- 2 789 457
- EP-A1- 2 799 218
- WO-A1-2013/083071
- CN-A- 101 372 155
- CN-A- 101 372 155
- CN-A- 101 670 677
- CN-A- 103 144 333
- CN-U- 202 344 862
- CN-U- 202 344 862
- CN-U- 202 412 719
- CN-U- 202 412 722
- US-A- 5 948 207

## Description

The invention relates to a triple-drum forming machine for a tire billet and a material conveying method thereof, and belongs to the field of rubber machinery.

Kinds of vehicles used at present, for examples, rubber tires used by spacecrafts and vehicles applied to the military and civilian fields, are mainly composed of a steel wire tire bead, a tire body component and a belted layer-tread component.

Two-drum, triple-drum and four-drum forming machines and the methods thereof are usually used in the existing tire billet manufacturing device and method. The difference of the tire billet production technologies is determined by differences of the manufacturing equipments and methods; these manufacturing equipments and methods have certain extent of defects, and cannot completely achieve the requirements of the tire forming quality and the production efficiency. Document CN 101 372 155 A discloses a triple-drum forming machine for the tire billet and the method thereof. The technical scheme is as follows: a tire body drum, a belted layer drum and a forming drum of the forming machine are arranged on the same horizontal axis; the tire body drum is carried by a tire body drum drive unit; the belted layer drum and the forming drum are carried by a same forming drum drive unit; the forming drum drive unit and the tire body drum drive unit are oppositely and coaxially arranged on the same bottom guide rail; a tire body transfer ring component for conveying a prepared tire body component to the forming drum is connected to the bottom guide rail in a sliding manner between the tire body drum and the forming drum; the belted layer transfer ring for conveying a prepared belted layer-tread component to the forming drum is connected to the bottom guide rail between the tire body drum and the forming drum.

Furthermore, CN 101670677 A relates to a three drum-type radial tyre forming machine with a space between a first section forming machine and a second section forming machine which is provided with a rotary table device and a carcass transmission ring connecting processing procedures of the first section forming machine and the section forming machine. US 5, 948, 207 A describes an assembly for building a green or non-vulcanized tire for vehicles, the assembly being provided with two separately drivable building drums in line with each other, for the belt and the tread; two carcass drums located parallel to each other, mounted on a common, rotatable shaft. EP 2 799 218 A1 discloses a unistage dual-drum forming machine for a car tyre and a method thereof, and provides a basic structure of a tool-drum and three-work-station forming machine.

The tire body transfer ring component and the belted layer transfer ring described in CN 101372155 carry out reciprocating sliding to convey kinds of materials along the bottom guide rail in an equipment device for manufacturing the tire; a lot of parts of the tire forming machine are arranged on the ground as a whole and occupy large land surface area. Therefore, an operator always shuttles back and forth between kinds of mobile components in the tire billet manufacturing process, so as to easily generate collision of the operator and the equipment, resulting in a potential safety hazard.

The equipment arranged on the ground needs to pave kinds of pipelines; it is difficult to penetrate into the internal part of the equipment structure when the operator installs, debugs and inspects the overall forming machine; the operation difficulty is large and time and labor are wasted.

In addition, the tire body transfer ring component and the belted layer transfer ring are arranged on the same bottom guide rail to convey the materials in a reciprocating manner; the demands on the flatness of the guide rail and the ground are high; the operation accuracy for manufacturing the overall tire billet is directly affected once the guide rail inclines or horizontally misplaces. On that account, the patent application is particularly proposed.

The triple-drum forming machine for manufacturing a tire according to claim 1 and the material conveying method thereof according to claim 7 as disclosed by the invention are invented to solve the defects and disadvantages of the problems, so that an overhead portal frame structure is adopted in the preparation and conveying processes of a tire body component and a belted layer-tread component, namely a tire body transfer ring component and a belted layer transfer ring are conveyed in a sliding manner along a top portal frame to finish an air operation of all materials, so as to clear related ground conveyers, further reduce the occupied space of the forming machine and simplify the structures of the ground parts. Thus, control and auxiliary operations of an operator in a tire billet manufacturing process are facilitated, and a collision accident caused by collision of the operator and the equipment is avoided.

Another purpose of the invention is that pipeline pavement of the ground equipment is simplified, and installing, debugging and inspection of the overall forming machine by the operator are facilitated.

The purpose of the invention also is that coaxial lifting of all devices of the forming machine is achieved by improving the accuracy of a conveying track of the tire body transfer ring component and the belted layer transfer ring, so as to effectively improve the tire billet manufacturing quality. The portal frame provides a slide rail above the top in the processes of preparing and conveying the tire body component and the belted layer-tread component; the tire body transfer ring component and the belted layer transfer ring can finish a material conveying operation, so as to clear related ground conveyers and to-be-paved pipelines.

Concretely, in the simultaneously carried out processes of preparing the tire body component and conveying the tire body component to the forming drum and the processes of preparing the belted layer-tread component and conveying the belted layer-tread component to the forming drum, the tire body transfer ring component and the belted layer transfer ring can transversely slide to a processing station along the portal frame. Material conveying is finished in the air, so that the material conveying is not affected by the ground device and the staff in the tire billet manufacturing process, and an accident caused by collision of the staff and equipments is effectively avoided.

In order to improve the maneuverability in the processes of conveying the tire body transfer ring component and the belted layer transfer ring in a sliding manner, a preferable implementation mode is as follows:
Ring bases are respectively arranged at the tops of the tire body transfer ring component and the belted layer transfer ring; a drive motor which is connected to or controlled by the tire body drive unit or the forming drum drive unit is arranged on each ring base; an output shaft of each drive motor is connected with a gear meshed with a rack on the portal frame.

Namely transverse sliding of the tire body transfer ring component and the belted layer transfer ring along the portal frame is finished by the drive motor for driving transmission between the gear and the frame.

In order to prevent the tire body transfer ring component and the belted layer transfer ring from generating bouncing strength in the transverse sliding process and improve the smoothness of the sliding process, slideways can be arranged at two sides of the portal frame; the ring bases of the portal frame are connected with a pair of slide saddles; slide blocks arranged on the slide saddles are meshed with the slideways.

Namely two sides of the top can provide sliding guide by virtue of the slideways to ensure that the overall ring body does not deflect or swing when the tire body transfer ring component and the belted layer transfer ring transversely slide, so as to effectively reduce the sliding resistance.

In order to further ensure that the transverse central line of the portal frame overlaps with the axial center lines of the tire body drum, the belted layer drum and the forming drum, or debugging and correcting can be carried out in deflection or misplacement, a plurality of groups of adjusting frames for adjusting the horizontal distances can be arranged between the vertical directions of the truss and the upright posts of the portal frame;

The adjusting frames are arranged inside the slide chutes at the tops of the upright posts, and are upwards connected with the truss;

Vertical brackets are arranged on the upright posts; inner thread holds are formed on the vertical brackets and connected with horizontal adjusting bolts; the horizontal adjusting bolts are connected to the adjusting frames.

In order to ensure that the vertical heights of the tire body transfer ring component and the belted layer transfer ring in the transverse sliding process are kept consistent through the portal frame, wedge liner components which are upwards screwed on the truss are arranged on the adjusting frames and arranged into a fixation slot; each wedge liner component comprises an upper wedge liner and a lower wedge liner, which are vertically laminated; inner thread holes are formed in the fixation slot and connected with vertical adjusting bolts; the vertical adjusting bolts are connected with each upper wedge liner or each lower wedge liner.

The upper wedge liners and the lower wedge liners are driven to carry out longitudinal displacement through the vertical adjusting bolts, so as to adjust the vertical height of each end point of the truss.

In order to improve the centering accuracy of the material attached to the drum, and provide a corresponding operation of visual ruler, a light ruler can be arranged at the side part of the portal frame.

Based on improvement of the triple-drum forming machine for the tire billet, the material conveying method is simultaneously achieved from the design concept of the triple-drum forming machine as follows:
The tire bead for forming the tire, the tire body component and the belted layer-tread component are respectively prepared; the prepared tire body component and belted layer-tread component are respectively conveyed to the forming drum, so as to finish a manufacturing cycle of the overall technology.

The method flow for manufacturing the tire on the triple-drum forming machine for the tire billet comprises the following steps:
(1) Preparing the tire body component;
(2) Conveying the tire body component to the forming drum;
(3) Preparing the belted layer-tread component;
(4) Conveying the belted layer-tread component to the forming drum;
(5) Finishing tire billet manufacturing on the forming drum.

Compared with the existing material conveying method of the triple-drum forming machine for the tire, the differences are as follows:
The portal frame which is arranged above the vertical directions of tire body transfer ring component and the belted layer transfer ring provides a sliding conveying path along two sides of the axial center lines of the tire body drum, the belted layer drum and the forming drum;

The tire body transfer ring component transversely slides along the portal frame to clamp and convey the tire body component to the forming drum in the step (2);

The belted layer transfer ring transversely slides along the portal frame to convey the material for forming the belted layer-tread component to the belted layer drum and prepare the tread component in the step (3);

The belted layer transfer ring transversely slides to the belted layer drum along the portal frame, clamps the tread component and conveys to the forming drum in the step (4);

The processes of preparing the tire body component and conveying the tire body component to the forming drum in the steps (1) and (2) and the processes of preparing the belted layer-tread component and conveying to the belted layer-tread component to the forming drum in the steps (3) and (4) are simultaneously carried out;

The belted layer transfer ring transversely slides to the forming drum along the portal frame to clamp the formed tire billet and convey the tire billet to a tire unloading mechanism after the sizing and pressing operations of the tread component and a tire body barrel are finished on the forming drum in the step (5).

On the basis of the material conveying method, the improvement scheme aiming at the sliding conveying maneuverability is as follows: the tire body transfer ring component and the belted layer transfer ring drive transmission between the gear and the rack on the portal frame by virtue of the drive motor to achieve transverse sliding of the tire body transfer ring component and the belted layer transfer ring along the portal frame, so as to finish material conveying.

The improvement scheme aiming at the sliding conveying smoothness is as follows: the tops of the tire body transfer ring component and the belted layer transfer ring provide sliding guide through the slide saddles meshed with the slideways at two sides of the portal frame in the process of transversely sliding along the portal frame.

In order to further ensure that the portal frame overlaps with the axial center lines of three drums, the tire body transfer ring component and the belted layer transfer ring, and a plurality of components are consistent in vertical height in the sliding process, the adjusting frames can be driven to carry out longitudinal displacement through the horizontal adjusting bolts, so as to adjust the position of the transverse center line of the truss between the vertical directions of the truss and the upright posts of the portal frame;

The upper wedge liners and the lower wedge liners are driven to carry out longitudinal displacement through the vertical adjusting bolts, so as to adjust the vertical height of each end point of the truss.

To sum up the above contents, the triple-drum forming machine for the tire and the material conveying method thereof have the advantages that:
1. The tire body transfer ring component and the belted layer transfer ring carry out sliding conveying along the portal frame, so as to finish air operation of all materials. Thus, the related ground conveyers can be effectively cleared, the occupation structure of the forming machine is simplified, and the construction operation of the operator is facilitated.
2. The accident caused by collision of the operator and the ground equipment can be avoided, and field production is protected.
3. Pipeline pavement of the ground equipment can be simplified, and the overall installation, debugging and inspection of the forming machine by the operator are facilitated.
4. The accuracy of the conveying track of the tire body transfer ring component and the belted layer transfer ring can be improved, so as to effectively improve the tire billet manufacturing quality.

### Description of figures

The figure 1 is a structure layout of the triple-drum forming machine for the tire;
The figure 2 is a main machine part sketch map of the forming machine;
The figure 3 is the sketch map of the portal frame;
The figure 4 is the structure sketch map of the truncated main machine part of the forming machine;
The figure 5 is the structure sketch map of the portal frame part from which the truss is removed;
The figure 6 is the structure sketch map of the part in the figure 5 from which the wedge liner components are removed.

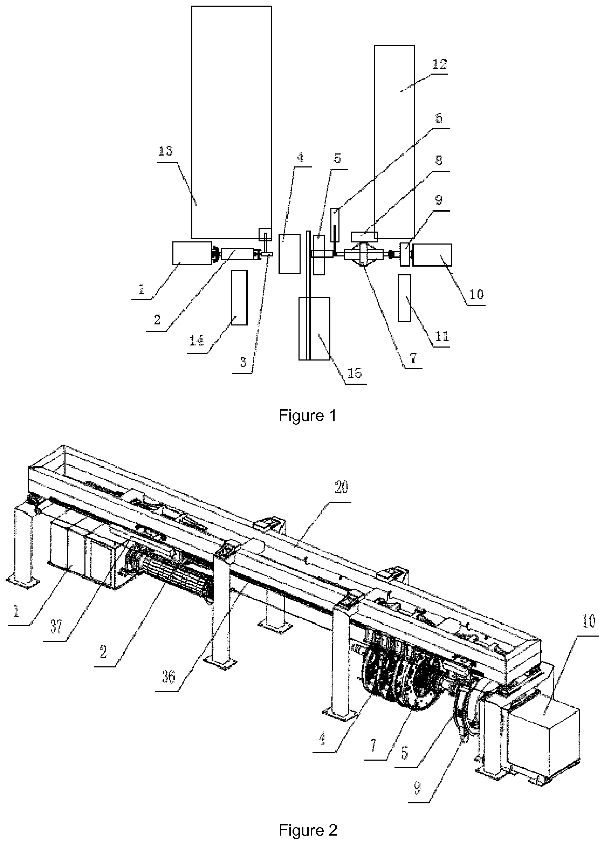

As shown in the figures 1 to 6, a tire body drum drive unit 1, a tire body drum 2, a tire body drum tailstock 3, a tire body transfer ring component 4, a belted layer transfer ring 5, a forming drum tailstock 6, a forming drum 7, a combined roller 8, a belted layer drum 9, a forming drum drive unit 10, a tread feeding frame 11, a belted layer feeding frame 12, a main feeding frame 13, a pad rubber feeding frame 14, a tire unloading mechanism 15;

A portal frame 20, a truss 21, upright posts 22, adjusting frames 23, slide chutes 24, vertical brackets 25, horizontal adjusting bolts 26, wedge liner components 27, a fixation slot 28, vertical adjusting bolts 29;

Ring bases 30, drive motors 31, frames 32, gears 33, slide saddles 34, slide blocks 35, slideways 36, a light ruler 37,

Upper wedge liners (271), and lower wedge liners (272).

### Concrete implementation modes

The embodiment 1, as shown in the figures 1 to 6, the triple-drum forming machine for the tire mainly comprises the tire body drum 2, the belted layer drum 9 and the forming drum 7, which are arranged on the same horizontal axis.

A feeding system of the tire body drum 2 comprises the main feeding frame 13 and the pad rubber feeding frame 14 arranged at two sides of the tire body drum 2.

The feeding system of the belted layer drum 9 comprises the tread feeding frame 11 and the belted layer feeding frame 12 arranged at two sides of the belted layer drum 9.

The drive unit of the tire body drum 2 is the tire body drum drive unit 1 which is coaxially arranged on the outer side of the tire body drum 2.

The forming drum 7 and the belted layer drum 9 are carried by the same forming drum drive unit 10 arranged at the outer side of the belted layer drum 9.

The tire body drum drive unit 1 and the forming drum drive unit 10 are oppositely and coaxially arranged.

The tire body transfer component 4 for conveying the prepared tire body component to the forming drum 7 is arranged between the tire body drum 2 and the forming drum 7; the tire body transfer component 4 is used for clamping and conveying the tire body component; the tire body transfer component 4 comprises a steel rim clamping ring for clamping a steel rim, a tire body clamping ring and a tire side expansion ring.

The belted layer transfer ring 5 for conveying the prepared belted layer-tread component to the forming drum 7 is arranged at one side of the forming drum 7; the belted layer transfer ring 5 is arranged between the tire body drum 2 and the belted layer drum 9.

Based on the main machine structure of the forming machine, the portal frame 20 for conveying materials is arranged above the vertical directions of the tire body drum 2, the tire body drum layer 9 and the forming drum 7.

The transverse center line of the portal frame 20 overlaps with the axial center lines of the tire body drum 2, the tire body drum layer 9 and the forming drum 7.

The portal frame 20 comprises the horizontally arranged truss 21 and a plurality of groups of vertically installed upright posts 22; the truss 21 and the upright posts 22 are connected with each other.

The ring bases 30 are respectively arranged at the tops of the tire body transfer ring component 4 and the belted layer transfer ring 5; the drive motors 31 which are connected to and controlled by the tire body drum drive unit 1 or the forming drum drive unit 10 are arranged on the ring bases 30.

A full rack 32 is arranged at the side part of the portal frame 20; the output shafts of the drive motors 31 are connected with the gears 33 meshed with the racks 32.

The output shafts of the drive motors 31 clockwise or anticlockwise rotate to drive the gears 33 to transmit on the racks 32 by control and signal conveying of the tire body drum drive unit 1 and the tire body drum drive unit 10; the drive motors 31 and the ring bases 30 drive the tire body transfer ring component 4 and the belted layer transfer ring 5 to slide in a reciprocating manner along the transverse direction of the portal frame 20 in common, so as to achieve material conveying between the stations of three drums.

A pair of slideways 36 is arranged at two sides of the portal frame 20; the ring bases 30 are connected to a pair of slide saddles 34; the slide blocks 35 arranged on the slide saddles 34 are meshed with the slideways 36.

The overall ring body does not deflect or swing by virtue of sliding guide at two sides provided by the slideways 36 when the drive motors 31 drive the tire body transfer ring component 4 and the belted layer transfer ring 5 to transversely slide, so as to effectively reduce the sliding resistance.

A plurality of groups of adjusting frames 23 for adjusting the horizontal distances are arranged between the vertical directions of the truss 21 and the upright posts 22; the adjusting frames 23 are arranged in the slide chutes 24 at the tops of the upright posts 22; the wedge liner components 27 which are upwards screwed on the truss 21 are arranged on the adjusting frames 23, and arranged inside the fixation slot 28.

The vertical brackets 25 are arranged on the upright posts 22; inner thread holes are formed on the vertical brackets 25 and connected with the horizontal adjusting bolts 26; the horizontal adjusting bolts 26 are connected with the adjusting frames 23.

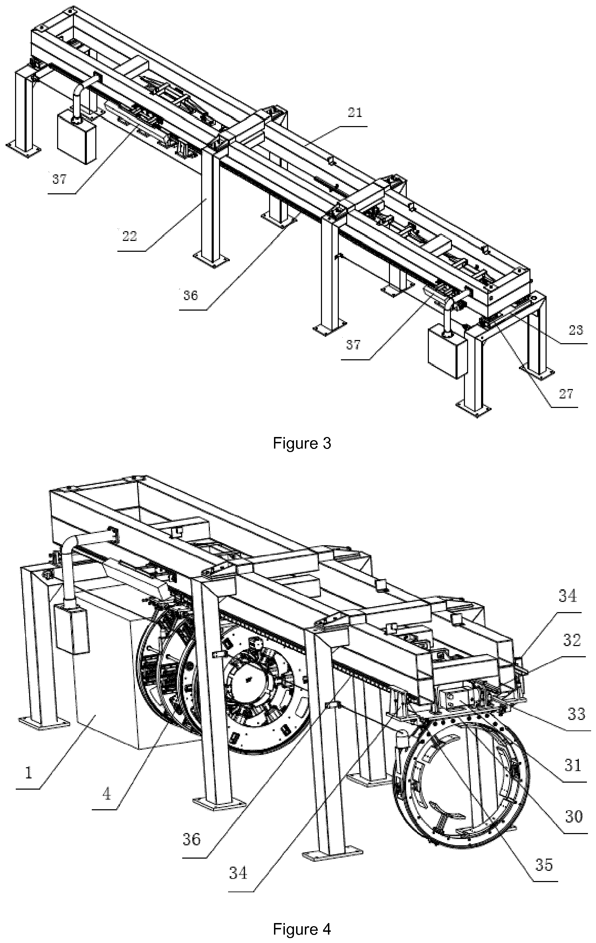

The horizontal adjusting bolts 26 can be rotated through a spanner under the premise of loosening lock bolts between the truss 21 and the upright posts 22; the horizontal adjusting bolts 26 clockwise or anticlockwise rotate inside the inner thread holes on the vertical brackets 25, so as to achieve longitudinal displacement (the longitudinal direction is the direction vertical to the axial center lines of the tire body rum 2, the belted layer drum 9 and the forming drum 7 in the figures 2 and 3) of the truss 21 through the adjusting frames 23 and the wedge liner components 27, namely the transverse center line of the portal frame 20 is adjusted to overlap with the axial center lines of the tire body rum 2, the belted layer drum 9 and the forming drum 7.

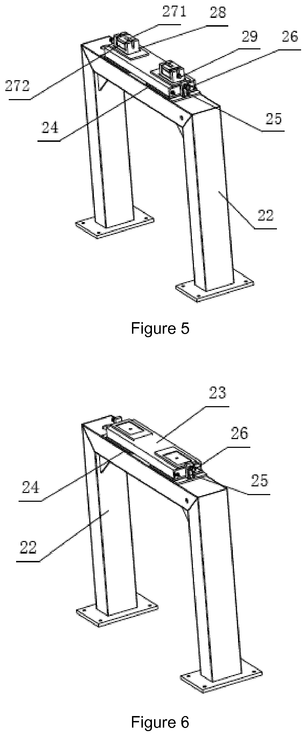

As shown in the figure 5, the wedge liner component 27 comprises the upper wedge liner 271 and a lower wedge liner 272, which are vertically laminated; the inner thread holes are arranged inside the fixation slot 28; the fixation slot 28 is connected with the vertical adjusting bolts 29; the vertical adjusting bolts 29 are connected with the upper wedge liner 271 or the lower wedge liner 272.

The vertical adjusting bolts 29 can be rotated through the spanner, and clockwise or anticlockwise rotate inside the inner thread holes in the fixation slot 28, so as to achieve longitudinal displacement of the upper wedge liner 271 or the lower wedge liner 272.

Because the combined surface of the upper wedge liner 271 and the lower wedge liner 272 is an inclined plane, equivalently, the truss 21 is lifted upwards or reduced downwards when longitudinal displacement is generated between the upper wedge liner 271 and the lower wedge liner 272, so as to achieve adjustment of the truss 21 oppositely to the vertical heights of the upright posts 22, namely the height of each end angle of the truss 21 is adjustable, and the vertical heights of the tire body transfer ring component 4 and the belted layer transfer ring 5 in the transverse sliding process can be kept consistent.

The light rulers 37 is arranged at the side part of the portal frame 20 and above the tire body drum 2 and the belted layer drum 9, so that a light beam irradiates on the tire body drum 2 and the belted layer drum 9, so as to finish centering accuracy of the material attached to the drum in an assisting manner, and provide corresponding operation of visual ruler.

Based on use of the triple-drum forming machine for the tire, a novel material conveying method is achieved by the embodiment in the tire billet manufacturing processes as follows:
The tire bead for forming the tire, the tire body component and the belted layer-tread component are respectively prepared; the prepared tire body component and belted layer-tread component are respectively conveyed to the forming drum 7, so as to finish a manufacturing cycle of the overall technology.

The method flow for manufacturing the tire on the triple-drum forming machine for the tire comprises the following steps:
(1) Preparing the tire body component,
   Namely the tire bead is placed at the preset position of the tire bead near the tire body drum by adopting a manual or mechanical device;
   The tire body drum drive unit 1 drives the tire body drum 2 to rotate to the position demanded by the tire side technology through a servo motor, and carries out angle location;
   The tire body drum 2 is continuously and linearly expanded, so that the diameter value achieves the technological requirements;
   The tire body drum tailstock 3 is driven through a cylinder, and put into the position overlapping with the center line of the tire body drum 2, and supports the tire body drum 2;
   The main feeding frame 13 conveys the precut tire side element to the tire body drum 2; the tire side element is adsorbed and fixed through a vacuum adsorption hole on the tire body drum 2, and rotates a cycle along with the tire body drum 2; tire side element is laminated and jointed;
   The tire body drum drive unit 1 drives the tire body drum 2 to rotate to the position demanded by the inside liner technology through the servo motor, and carries out angle location;
   The main feeding frame 13 conveys the precut inside liner to the tire body drum 2; the inside liner is adsorbed and fixed through the vacuum adsorption hole on the tire body drum 2, and rotates a cycle along with the tire body drum 2; the inside liner is laminated and jointed;
   The tire body drum drive unit 1 drives the tire body drum 2 to rotate to the position demanded by the bead fabric technology through the servo motor, and carries out angle location;
   The main feeding frame 13 conveys the bead fabric to the tire body drum 2; the bead fabric is fixed and jointed, and rotates a cycle along with the tire body drum 2; the bead fabric is cut off and laminated and jointed; the diameter of the tire body drum 2 expands a little;
   The bead fabric is laminated by adopting a laminating device; the tire body drum drive unit 1 drives the tire body drum 2 to rotate to the position demanded by a tire body curtain technology through the servo motor, and carries out angle location;
   The main feeding frame 13 conveys the cut-off tire body curtain to the tire body drum 2; the tire body curtain is fixed and jointed, and rotates a cycle along with the tire body drum 2; the tire body curtain is sewed and jointed; the diameter of the tire body drum 2 expands a little again; a sizing material is laminated by adopting the laminating device, so as to ensure absence of air bubbles between the laminating layers;
   The tire body drum drive unit 1 drives the tire body drum 2 to rotate to the position demanded by a pad rubber technology through the servo motor, and carries out angle location;
   The pad rubber feeding frame 14 conveys the cut-off pad rubber to the tire body drum 2; the pad rubber is fixed and jointed, and rotates a cycle along with the tire body drum 2; the pad rubber is sewed and jointed;
   The tire body drum tailstock 3 is driven by the cylinder to swing to the initial position;
(2) Conveying the tire body component to the forming drum,
   The tire body drum drive unit 1 and the tire body drum 2 are driven through the cylinder or the servo motor to move to the waiting position of the tire body transfer ring component 4 in a straight line;
   The right steel rim clamping ring of the tire body transfer ring component 4 shrinks in a radial manner, and locates the right steel rim by adsorption of a magnet;
   The steel rim at the left end of the tire body drum 2 is conveyed to the left steel rim clamping ring of the tire body transfer ring component 4;
   The left steel rim clamping ring shrinks in a radial manner and locates the right steel rim by adsorption of the magnet; the tire body drum 2 is driven to carry out trace expansion in the radial manner for the third time, and achieves the position demanded by the technology; the tire body clamping ring of the tire body transfer ring component 4 shrinks in the radial manner, and adsorbs the tire body curtain by magnetism;
   The tire body drum 2 rapidly shrinks, and returns to the initial position through the cylinder;
   The tire side expansion ring of the tire body transfer ring component 4 carries out radial shrinkage and axial movement; the tire side expansion ring clamps the tire body barrel and carries out trace expansion in the radial manner;
   The tire body transfer ring component 4 is driven through the servo motor to convey the tire body barrel to the forming drum 7; the forming drum tailstock 6 swings in the radial manner and supports the tail end of the forming drum 7;
   A sector block of the forming drum 7 carries out radial expansion to locate the steel rim; all clamping rings of the tire body transfer ring component 4 expand in the radial manner; the sector block of the forming drum 7 locks the steel rim;
   The forming drum tailstock 6 comes away; the tire body transfer ring component 4 returns to the initial waiting position;
(3) Preparing the belted layer-tread component,
   The forming drum drive unit 10 drives the belted layer drum 9 to rotate to the laminating position demanded by the belted layer technology through the servo motor;
   The belted layer feeding frame 12 conveys 1#, 2#, 3#, 4# or 0-degree belted layer to the belted layer drum 9, so as to laminate;
   The tread feeding frame 11 conveys the tread to the belted layer drum 9 to laminate; the tread component is laminated by the tread roller of the belted layer feeding frame 12 after laminating;
(4) Conveying the belted layer-tread component to the forming drum,
   The implementation steps of preparing and conveying the tire body component and the implementation steps of preparing and conveying the belted layer-tread component are simultaneously carried out step by step;
   The belted layer transfer ring 5 is driven through the servo motor, so as to move to the position of the belted layer drum 9; the belted layer transfer ring 5 carries out radial shrinkage and clamps the tread component;
   The belted layer drum 9 is driven through the cylinder and carries out rapid shrinkage in the radial manner; the belted layer transfer ring 5 conveys the tread component to the position of the forming drum 7;
(5) Finishing tire billet manufacturing on the forming drum,
   The forming drum drive unit 10 drives the sector block of the forming drum 7 to carry out axial shrinkage, and simultaneously aerates the sealed tire body barrel through the inner shaft of the forming drum 7; the sector block of the forming drum 7 is locked at the finalized position demanded by the tire technology and inner pressure is kept after the tire body barrel is completely combined with the tread component;
   The belted layer transfer ring 5 moves to the waiting position, and the combined roller 8 is laminated to the tread and the tire side by drive of the servo motor;
   The belted layer transfer ring 5 moves to the position of the forming drum 7 and clamps the formed tire billet and the tire billet is conveyed to the position of the tire unloading mechanism 15 after the combined roller 8 is completely laminated;
   The tire unloading mechanism 15 shifts the formed tire billet of the external space of the triple-drum forming machine.
   The tire body transfer ring component 4 transversely slides along the portal frame 20 to clamp and convey the tire body component to the forming drum 7 in the step (2);
   The belted layer transfer ring 5 transversely slides along the portal frame 20 to convey the material of forming the belted layer-tread component to the belted layer drum 9 and prepare the tread component in the step (3);
   The belted layer transfer ring 5 transversely slides to the belted layer drum 9 along the portal frame 20 and clamps and conveys the tread component to the forming drum 7 in the step (4);
   The processes of preparing and conveying the tire body component to the forming drum in the steps (1) and (2) and the processes of preparing and conveying the belted layer-tread component to the forming drum in the steps (3) and (4) are simultaneously carried out;
   The belted layer transfer ring 5 transversely slides to the forming drum 7 along the portal frame 20, so as to clamp the formed tire billet and convey the tire billet to the tire unloading mechanism 15 after the fixing and laminating operations of the tire body barrel and the tread component are finished on the forming drum 7 in the step (5).

Based on control of the method flow, the tire body transfer ring component 4 and the belted layer transfer ring 5 drive transmission between gears 33 and the racks 32 on the portal frame 20 by virtue of the drive motors 31, and transverse sliding of the tire body transfer ring component 4 and the belted layer transfer ring 5 along the portal frame 20 is achieved, so as to finish material conveying.

The tops of the tire body transfer ring component 4 and the belted layer transfer ring 5 provide sliding guide through the slide saddles 34 of the slideways 36 at two sides of the portal frame 20 in the process of transversely sliding along the portal frame 20.

The adjusting frames 23 are driven to carry out longitudinal displacement through the horizontal adjusting bolts 26, so as to adjust the position of the transverse center line of the truss 21 between the truss 21 and the upright posts 22;
The upper wedge liners 271 and the lower wedge liners 272 are driven to carry out longitudinal displacement through the vertical adjusting bolts 29, so as to adjust the vertical height of each end point of the truss 21.

## Claims

1. A triple-drum forming machine for manufacturing
a tire, wherein the triple-drum forming machine comprises a tire body drum (2), a belted layer drum (9) and a forming drum (7), which are arranged on the same horizontal axis; wherein the tire body drum (2) is carried by a tire body drum drive unit (1); the belted layer drum (9) and the forming drum (7) are carried by a same forming drum drive unit (10); further comprising a tire body transfer ring component (4) for conveying a prepared tire body component to the forming drum (7) is arranged between the tire body drum (2) and the forming drum (7);
a belted layer transfer ring (5) for conveying a prepared belted layer-tread component to the forming drum (7) is arranged between the tire body drum (2) and the belted layer drum (9); the triple-drum forming machine is **characterized in that**:
a portal frame (20) for conveying material is arranged above the vertical directions of the tire body drum (2), the belted layer drum (9) and the forming drum (7);
wherein the transverse central line of the portal frame (20) overlaps with the axial center lines of the tire body drum (2), the belted layer drum (9) and the forming drum (7); the tops of the tire body transfer ring component (4) and the belted layer transfer ring (5) are respectively connected to the portal frame (20) in a sliding manner; and the portal frame (20) comprises a horizontally arranged truss (21) and a plurality of groups of vertically arranged upright posts (22); the horizontally arranged truss (21) is connected with the vertically arranged upright posts (22).

2. The triple-drum forming machine for manufacturing a tire according to claim 1, **characterized in that** ring bases (30) are respectively arranged at the tops of the tire body transfer ring component (4) and the belted layer transfer ring (5); a drive motor (31) which is connected to or controlled by the tire body drive unit (1) or the forming drum drive unit (10) is arranged on each ring base (30); and an output shaft of each drive motor (31) is connected with a gear (33) meshed with a rack (32) on the portal frame (20).

3. The triple-drum forming machine for manufacturing a tire according to claim 2, **characterized in that** slideways (36) are arranged at two sides of the portal frame (20); the ring bases (30) are connected with a pair of slide saddles (34); slide blocks (35) arranged on the slide saddles (34) are meshed with the slideways (36).

4. The triple-drum forming machine for manufacturing a tire according to any of claims 1, 2 or 3, **characterized in that** a plurality of groups of adjusting frames (23) for adjusting the horizontal distances between the truss (21) and the upright posts (22) are arranged between the vertical directions of the truss (21) and the upright posts (22); wherein the adjusting frames (23) are arranged inside slide chutes (24) at the tops of the upright posts (22), and connected to the truss (21) upwards; and vertical brackets (25) are arranged on the upright posts (22); inner thread holes are formed on the vertical brackets (25) and connected with horizontal adjusting bolts (26); the horizontal adjusting bolts (26) are connected to the adjusting frames (23).

5. The triple-drum forming machine for manufacturing a tire according to claim 4, **characterized in that** wedge liner components (27) which are upwards screwed on the truss (21) are arranged on the adjusting frames (23) and arranged into a fixation slot (28); wherein each wedge liner component (27) comprises an upper wedge liner (271) and a lower wedge liner (272), which are vertically laminated; and wherein inner thread holes are formed inside the fixation slot (28) and connected with vertical adjusting bolts (29); the vertical adjusting bolts (29) are connected with each upper wedge liner (271) or each lower wedge liner (272).

6. The triple-drum forming machine for manufacturing a tire according to claim 5, **characterized in that** a light ruler (37) is arranged at the side part of the portal frame (20).

7. A material conveying method of a triple-drum forming machine for manufacturing a tire according to any one of claims 1 to 6, **characterized in that** a tire bead for forming the tire billet, the tire body component and the belted layer-tread component are respectively prepared; the prepared tire body component and belted layer-tread component are respectively conveyed to the forming drum (7), so as to finish a manufacturing cycle of the overall technology;
the material conveying method is **characterized in that** the portal frame (20) which is arranged above the vertical directions of the tire body transfer ring component (4) and the belted layer transfer ring (5) provides a sliding conveying path along two sides of the axial center lines of the tire body drum (2), the belted layer drum (9) and the forming drum (7);
wherein the tire body transfer ring component (4) transversely slides along the portal frame (20) to clamp and convey the tire body component to the forming drum (7) in the process of conveying the tire body component to the forming drum;
wherein the belted layer transfer ring (5) transversely slides along the portal frame (20) to convey the material for forming the belted layer-tread component to the belted layer drum (9) and prepare the tread component in the process of preparing the belted layer-tread component;
and the belted layer transfer ring (5) transversely slides to the belted layer drum (9) along the portal frame (20),clamps the tread component and conveys to the forming drum (7) in the process of conveying the belted layer-tread component to the forming drum;
wherein the processes of preparing the tire body component and conveying the tire body component to the forming drum and the processes of preparing the belted layer-tread component and conveying to the belted layer-tread component to the forming drum are simultaneously carried out;
the belted layer transfer ring (5) transversely slides to the forming drum (7) along the portal frame (20) to clamp the formed tire billet and convey the tire billet to a tire unloading mechanism (15) after the sizing and pressing operations of the tread component and a tire body barrel are finished on the forming drum (7) in the process of finishing tire billet manufacturing on the forming drum.

8. The material conveying method of the triple-drum forming machine for manufacturing a tire according to claim 7, **characterized in that** the tire body transfer ring component (4) and the belted layer transfer ring (5) drive transmission between the gear (33) and the rack (32) on the portal frame (20) by virtue of the drive motor (31) to achieve transverse sliding of the tire body transfer ring component (4) and the belted layer transfer ring (5) along the portal frame (20), so as to finish material conveying.

9. The material conveying method of the triple-drum forming machine for manufacturing a tire according to claim 8, **characterized in that** the tops of the tire body transfer ring component (4) and the belted layer transfer ring (5) provide sliding guide through the slide saddles (34) meshed with the slideways (36) at two sides of the portal frame (20) in the process of transversely sliding along the portal frame (20).

10. The material conveying method of the triple-drum forming machine for manufacturing a tire according to any of claims 7, 8 or 9, **characterized in that** the adjusting frames (23) are driven to carry out longitudinal displacement through the horizontal adjusting bolts (26), so as to adjust the position of the transverse center line of the truss (21) between the vertical directions of the truss (21) and the upright posts (22);
wherein the upper wedge liners (271) and the lower wedge liners (272) are driven to carry out longitudinal displacement through the vertical adjusting bolts (29), so as to adjust the vertical height of each end point of the truss (21).

## Patentansprüche

1. Dreitrommel-Formungsmaschine zur Herstellung eines Reifens, wobei die Dreitrommel-Formungsmaschine eine Reifenunterbautrommel (2), eine Gürteltrommel (9) und eine Formungstrommel (7) umfasst, die auf derselben horizontalen Achse angeordnet sind;
wobei die Reifenunterbautrommel (2) von einer Reifenunterbautrommel-Antriebseinheit (1) getragen wird, die Gürteltrommel (9) und die Formungstrommel (7) von derselben Formungstrommel-Antriebseinheit (10) getragen werden;
ferner umfassend eine Reifenunterbauüberführungsringkomponente (4) zum Befördern einer hergestellten Reifenunterbaukomponente zur Formungstrommel (7), die zwischen der Reifenunterbautrommel (2) und der Formungstrommel (7) angeordnet ist;
ein Gürtelüberführungsring (5) zum Befördern einer hergestellten Gürtelprofilkomponente zur Formungstrommel (7) zwischen der Reifenunterbautrommel (2) und der Gürteltrommel (9) angeordnet ist, wobei die Dreitrommel-Formungsmaschine **dadurch gekennzeichnet ist, dass**:
ein Portalrahmen (20) zum Befördern von Material über den vertikalen Richtungen der Reifenunterbautrommel (2), der Gürteltrommel (9) und der Formungstrommel (7) angeordnet ist;
wobei die querverlaufende Mittellinie des Portalrahmens (20) mit den axialen Mittellinien der Reifenunterbautrommel (2), der Gürteltrommel (9) und der Formungstrommel (7) überlappt;
die Oberseiten der Reifenunterbauüberführungsringkomponente (4) und des Gürtelüberführungsrings (5) jeweils gleitend mit dem Portalrahmen (20) verbunden sind; und
der Portalrahmen (20) einen horizontal angeordneten Träger (21) und mehrere Gruppen vertikal angeordneter, aufrechtstehender Pfosten (22) umfasst; wobei der horizontal angeordnete Träger (21) mit den vertikal angeordneten, aufrechtstehenden Pfosten (22) verbunden ist.

2. Dreitrommel-Formungsmaschine zur Herstellung eines Reifens nach Anspruch 1, **dadurch gekennzeichnet, dass** Ringbasen (30) jeweils an den Oberseiten der Reifenunterbauüberführungsringkomponente (4) und des Gürtelüberführungsrings (5) angeordnet sind, ein Antriebsmotor (31), der mit Reifenunterbautrommel-Antriebseinheit (1) oder der Formungstrommel-Antriebseinheit (10) verbunden ist oder durch diese gesteuert wird, auf jeder Ringbasis (30) angeordnet ist;
und eine Ausgangswelle jedes Antriebsmotors (31) mit einem Zahnrad (33) verbunden ist, das mit einer Zahnstange (32) am Portalrahmen (20) in Eingriff steht.

3. Dreitrommel-Formungsmaschine zur Herstellung eines Reifens nach Anspruch 2, **dadurch gekennzeichnet, dass** Schiebedurchführungen (36) an zwei Seiten des Portalrahmens (20) angeordnet sind; die Ringbasen (30) mit einem Paar von Gleitschlitten (34) verbunden sind; Gleitblöcke (35), die auf den Gleitschlitten (34) angeordnet sind, mit den Schiebedurchführungen (36) in Eingriff sind.

4. Dreitrommel-Formungsmaschine zur Herstellung eines Reifens nach einem der Ansprüche 1, 2 oder 3, **dadurch gekennzeichnet, dass** mehrere Gruppen von Einstellrahmen (23) zum Einstellen der horizontalen Abstände zwischen dem Träger (21) und den aufrechtstehenden Pfosten (22) zwischen den vertikalen Richtungen des Trägers (21) und der aufrechtstehenden Pfosten (22) angeordnet sind;
wobei die Einstellrahmen (23) im Inneren von Gleitrutschen (24) an den Oberseiten der aufrechtstehenden Pfosten (22) angeordnet sind und oben mit dem Träger (21) verbunden sind;
und vertikale Bügel (25) auf den aufrechtstehenden Pfosten (22) angeordnet sind; Innengewindelöcher auf den vertikalen Bügeln (25) gebildet und mit horizontalen Stellschrauben (26) verbunden sind; wobei die horizontalen Stellschrauben (26) mit den Einstellrahmen (23) verbunden sind.

5. Dreitrommel-Formungsmaschine zur Herstellung eines Reifens nach Anspruch 4, **dadurch gekennzeichnet, dass** Keileinlagekomponenten (27), die oben an den Träger (21) geschraubt sind, auf den Einstellrahmen (23) angeordnet sind und in einem Befestigungsschlitz (28) angeordnet sind;
wobei jede Keileinlagekomponente (27) eine obere Keileinlage (271) und eine untere Keileinlage (272) umfasst, die vertikal laminiert sind;
und wobei Innengewindelöcher im Inneren des Befestigungsschlitzes (28) gebildet sind und mit vertikalen Stellschrauben (29) verbunden sind; wobei die vertikalen Stellschrauben (29) mit jeder oberen Keileinlage (271) und jeder unteren Keileinlage (272) verbunden sind.

6. Dreitrommel-Formungsmaschine zur Herstellung eines Reifens nach Anspruch 5, **dadurch gekennzeichnet, dass** ein Lichtlineal (37) am Seitenteil des Portalrahmens (20) angeordnet ist.

7. Materialbeförderungsverfahren einer Dreitrommel-Formungsmaschine zur Herstellung eines Reifens nach einem der Ansprüche 1 bis 6, **dadurch gekennzeichnet, dass** ein Reifenwulst zur Bildung des Reifenrohlings, die Reifenunterbaukomponente und die Gürtelprofilkomponente jeweils vorbereitet werden; die vorbereitete Reifenunterbaukomponente und Gürtelprofilkomponente jeweils zur Formungstrommel (7) geleitet werden, um so einen Herstellungszyklus der gesamten Technologie zu vollenden;
wobei das Materialbeförderungsverfahren **dadurch gekennzeichnet ist, dass** der Portalrahmen (20), der über den über den vertikalen Richtungen der Reifenunterbauüberführungsringkomponente (4) und des Gürtelüberführungsrings (5) angeordnet ist, einen Gleitbeförderungspfad entlang zwei Seiten der axialen Mittellinien der Reifenunterbautrommel (2), der Gürteltrommel (9) und der Formungstrommel (7) bereitstellt;
wobei die Reifenunterbauüberführungsringkomponente (4) quer entlang des Portalrahmens (20) gleitet, um die Reifenunterbaukomponente festzuklemmen und zur Formungstrommel (7) in dem Beförderungsprozess der Reifenunterbaukomponente zur Formungstrommel zu befördern;
wobei der Gürtelüberführungsring (5) quer entlang des Portalrahmens (20) gleitet, um das Material zum Formen der Gürtelprofilkomponente zur Gürteltrommel (2) zu befördern und die Profilkomponente in dem Verfahren zur Vorbereitung der Gürtelprofilkomponente vorzubereiten;
und der Gürtelüberführungsring (5) quer zur Gürteltrommel (9) entlang des Portalrahmens (20) gleitet, die Profilkomponente festklemmt und zur Formungstrommel (7) in dem Beförderungsprozess der Gürtelprofilkomponente zur Formungstrommel zu befördert;
wobei die Prozesse zur Vorbereitung der Reifenunterbaukomponente und zum Befördern der Reifenunterbaukomponente zur Formungstrommel und die Prozesse zum Vorbereiten der Gürtelprofilkomponente und zum Befördern der Gürtelprofilkomponente zur Formungstrommel gleichzeitig ausgeführt werden;
der Gürtelüberführungsring (5) quer zur Formungstrommel (7) entlang des Portalrahmens (20) gleitet, um den gebildeten Reifenrohling festzuklemmen und den Reifenrohling zu einem Reifenentlademechanismus (15) zu befördern, sobald die Dimensionierungs- und Pressvorgänge der Profilkomponente und eines Reifenunterbaueinsatzes auf der Formungstrommel (7) in dem Prozess zur Vollendung der Reifenrohling-Herstellung auf der Formungstrommel beendet sind.

8. Materialbeförderungsverfahren der Dreitrommel-Formungsmaschine zur Herstellung eines Reifens nach Anspruch 7, **dadurch gekennzeichnet, dass** die Reifenunterbauüberführungsringkomponente (4) und der Gürtelüberführungsring (5) eine Übersetzung zwischen dem Zahnrad (33) und der Zahnstange (32) auf dem Portalrahmen (20) durch den Antriebsmotor (31) antreiben, um ein querverlaufendes Gleiten der Reifenunterbauüberführungsringkomponente (4) und des Gürtelüberführungsrings (5) entlang des Portalrahmens (20) zu erreichen, um somit die Materialbeförderung zu beenden.

9. Materialbeförderungsverfahren der Dreitrommel-Formungsmaschine zur Herstellung eines Reifens nach Anspruch 8, **dadurch gekennzeichnet, dass** die Oberseiten der Reifenunterbauüberführungsringkomponente (4) und des Gürtelüberführungsrings (5) eine Gleitführung durch die Gleitschlitten (34), die mit den Schiebedurchführungen (36) an beiden Seiten des Portalrahmens (20) in Eingriff sind, in dem Prozess eines querverlaufenden Gleitens entlang des Portalrahmens (20) bereitstellen.

10. Materialbeförderungsverfahren der Dreitrommel-Formungsmaschine zur Herstellung eines Reifens nach einem der Ansprüche 7, 8 oder 9, **dadurch gekennzeichnet, dass** die Einstellrahmen (23) angetrieben werden, um eine Längsverschiebung durch die horizontalen Stellschrauben (26) angetrieben werden, um somit die Position der querverlaufenden Mittellinie des Trägers (21) zwischen den vertikalen Richtungen des Trägers (21) und den aufrechtstehenden Pfosten (22) einzustellen;
wobei die oberen Keileinlagen (271) und die unteren Keileinlagen (22) angetrieben werden, um eine Längsverschiebung durch die vertikalen Stellschrauben (29) auszuführen, um somit die vertikale Höhe jedes Endpunkts des Trägers (21) einzustellen.

## Revendications

1. Machine de formage à trois tambours pour la fabrication d'un pneumatique, la machine de formage comprenant un tambour à corps de pneumatique (2), un tambour à couche ceinturée (9) et un tambour de formage (7), lesquels sont disposés sur le même axe horizontal ;
dans laquelle
le tambour à corps de pneumatique (2) est porté par une unité d'entraînement de tambour à corps de pneumatique (1) ; le tambour à couche ceinturée (9) et le tambour de formage (7) sont portés par la même unité d'entraînement de tambour de formage (10) ;
comprenant en outre
un composant annulaire de transfert de corps (4) destiné à transporter un composant de corps de pneumatique préparé vers le tambour de formage (7) est disposé entre le tambour à corps de pneumatique (2) et le tambour de formage (7) ;
un anneau de transfert de couche ceinturée (5) destiné à transporter un composant de bande de roulement à couche ceinturée vers le tambour de formage (7) est disposé entre le tambour à corps de pneumatique (2) et le tambour à couche ceinturée (9) ; la machine de formage à trois tambours étant **caractérisée en ce que** :
un portique (20) destiné à transporter du matériau est disposé au-dessus des directions verticales du tambour à corps de pneumatique (2), du tambour à couche ceinturée (9) et du tambour de formage (7) ;
dans laquelle
la ligne médiane transversale du portique (20) chevauche les lignes médianes axiales du tambour à corps de pneumatique (2), du tambour à couche ceinturée (9) et du tambour de formage (7) ;
les parties supérieures du composant annulaire de transfert de corps (4) et de l'anneau de transfert de couche ceinturée (5) sont respectivement reliées au portique (20) d'une manière coulissante ; et
le portique (20) comprend une armature (21) disposée horizontalement et une pluralité de groupes de poteaux droits (22) disposés verticalement ; l'armature (21) disposée horizontalement est reliée aux poteaux droits (22) disposés verticalement.

2. Machine de formage à trois tambours pour la fabrication d'un pneumatique selon la revendication 1, **caractérisée en ce que** des bases annulaires (30) sont disposées respectivement sur les parties supérieures du composant annulaire de transfert de corps (4) et de l'anneau de transfert de couche ceinturée (5) ; un moteur d'entraînement (31) relié à l'unité d'entraînement de corps de pneumatique (1) ou à l'unité d'entraînement de tambour de formage (10) ou commandé par celles-ci est disposé sur chaque base d'anneau (30) ; et
un arbre de sortie de chaque moteur d'entraînement (31) est relié à un engrenage (33) engrenant avec une crémaillère (32) sur le portique (20).

3. Machine de formage à trois tambours pour la fabrication d'un pneumatique selon la revendication 2, **caractérisée en ce que**
des glissières (36) sont disposées sur deux côtés du portique (20) ; les bases d'anneau (30) sont reliées à une paire de selles de coulissement (34) ; des blocs coulissants (35) sont disposés sur les selles de coulissement (34) engrènent avec les glissières (36).

4. Machine de formage à trois tambours pour la fabrication d'un pneumatique selon l'une quelconque des revendications 1, 2 ou 3, **caractérisée en ce que**
une pluralité de groupes de cadres de réglage (23) pour le réglage des distances horizontales entre l'armature (21) et les poteaux droits (22) est disposée entre les directions verticales de l'armature (21) et les poteaux droits (22) ;
dans laquelle
les cadres de réglage (23) sont disposés à l'intérieur de toboggans (24) sur les parties supérieures des poteaux droits (22), et reliés à l'armature (21) vers le haut ; et
des supports verticaux (25) sont disposés sur les poteaux droits (22) ; des trous filetés intérieurs sont formés sur les supports verticaux (25) et reliés à des boulons de réglage horizontaux (26) ; les boulons de réglage horizontaux (26) étant reliés aux cadres de réglage (23).

5. Machine de formage à trois tambours pour la fabrication d'un pneumatique selon la revendication 4, **caractérisée en ce que**
des composants de revêtement de cale (27) vissés sur l'armature (21) vers le haut sont disposés sur les cadres de réglage (23) et disposés dans une fente de fixation (28) ;
dans laquelle
chaque composant de revêtement de cale (27) comprend un revêtement de cale supérieur (271) et un revêtement de cale inférieur (272), lesquels sont stratifiés verticalement ;
et dans laquelle
des trous filetés sont formés à l'intérieur de la fente de fixation (28) et reliés à des boulons de réglage verticaux (29) ; les boulons de réglage verticaux (29) étant reliés à chaque revêtement de cale supérieur (271) ou à chaque revêtement de cale inférieur (272).

6. Machine de formage à trois tambours pour la fabrication d'un pneumatique selon la revendication 5, **caractérisée en ce que**
une règle lumineuse (37) est disposée sur la partie latérale du portique (20).

7. Procédé de transport de matériau d'une machine de formage à trois tambours pour la fabrication d'un pneumatique selon l'une quelconque des revendications 1 à 6, **caractérisé en ce qu'**un talon de pneumatique destiné à former le boudin de pneumatique, le composant de corps de pneumatique et le composant de bande de roulement à couche ceinturée sont préparés respectivement ; le composant de corps de pneumatique et le composant de bande de roulement à couche ceinturée préparés sont transportés respectivement vers le tambour de formage (7), de manière à terminer un cycle de fabrication de la technologie d'ensemble ;
le procédé de transport de matériau étant **caractérisé en ce que** le portique (20) disposé au-dessus des directions verticales du composant annulaire de transfert de corps (4) et de l'anneau de transfert de couche ceinturée (5) fournit un trajet de transport coulissant le long de deux côtés des lignes médianes axiales du tambour à corps de pneumatique (2), du tambour à couche ceinturée (9) et du tambour de formage (7) ;
dans lequel
le composant annulaire de transfert de corps (4) coulisse transversalement le long du portique (20) pour serrer le composant de corps de pneumatique et le transporter vers le tambour de formage (7) pendant le transport du composant de corps de pneumatique vers le tambour de formage ;
dans lequel
l'anneau de transfert de couche ceinturée (5) coulisse transversalement le long du portique (20) pour transporter le matériau destiné à former le composant de bande de roulement à couche ceinturée vers le tambour à couche ceinturée (9) et préparer le composant de bande de roulement pendant la préparation du composant de bande de roulement à couche ceinturée ; et
l'anneau de transfert de couche ceinturée (5) coulisse transversalement vers le tambour à couche ceinturée (9) le long du portique (20), serre le composant de bande de roulement et le transporte vers le tambour de formage (7) pendant le transport du composant de bande de roulement à couche ceinturée vers le tambour de formage ;
dans lequel
les opérations de préparation du composant de corps de pneumatique et de transport de composant de corps de pneumatique vers le tambour de formage, et les opérations de préparation du composant de bande de roulement à couche ceinturée et de transport du composant de bande de roulement à couche ceinturée vers le tambour de formage sont exécutées simultanément ;
l'anneau de transfert de couche ceinturée (5) coulisse transversalement vers le tambour de formage (7) le long du portique (20) pour serrer le boudin de pneumatique et transporter le boudin de pneumatique vers un mécanisme de chargement de pneumatique (15) une fois que les opérations de calibrage et de pressage du composant de bande de roulement et d'un cylindre de corps de pneumatique sont terminées sur le tambour de formage (7) pendant la finition de la fabrication du boudin de pneumatique sur le tambour de formage.

8. Procédé de transport de matériau de la machine de formage à trois tambours pour la fabrication d'un pneumatique selon la revendication 7, **caractérisé en ce que** le composant annulaire de transfert de corps (4) et l'anneau de transfert de couche ceinturée (5) entraînent la transmission entre l'engrenage (33) et la crémaillère (32) sur le portique (20) au moyen du moteur d'entraînement (31) pour provoquer le coulissement transversal du composant annulaire de transfert de corps (4) et de l'anneau de transfert de couche ceinturée (5) le long du portique (20), de manière à terminer le transport de matériau.

9. Procédé de transport de matériau de la machine de formage à trois tambours pour la fabrication d'un pneumatique selon la revendication 8, **caractérisé en ce que** les parties supérieures du composant annulaire de transfert de corps (4) et de l'anneau de transfert de couche ceinturée (5) fournissent un guide de coulissement à travers les selles de coulissement (34) engrenant avec les glissières (36) sur deux côtés du portique (20) pendant le coulissement transversal le long du portique (20).

10. Procédé de transport de matériau de la machine de formage à trois tambours pour la fabrication d'un pneumatique selon l'une quelconque des revendications 7, 8 ou 9, **caractérisé en ce que** les cadres de réglage (23) sont entraînés pour effectuer un déplacement longitudinal à travers les boulons de réglage horizontaux (26), de manière à régler la position de la ligne médiane transversale de l'armature (21) entre les directions verticales de l'armature (21) et les poteaux droits (22) ;
dans lequel
les revêtements de cale supérieurs (271) et les revêtements de cale inférieurs (272) sont entraînés pour effectuer un déplacement longitudinal à travers les boulons de réglage verticaux (29), de manière à régler la hauteur verticale de chaque point d'extrémité de l'armature (21).
